# EUROPÄISCHE PATENTSCHRIFT

(11) **EP 2 789 419 B1**
(45) Veröffentlichungstag und Bekanntmachung des Hinweises auf die Patenterteilung: **01.07.2020**
(21) Anmeldenummer: 14155356.0
(22) Anmeldetag: 17.02.2014
(51) Int. Cl.: B23G 5/06

(54) **Werkzeug und Verfahren zur spanenden Gewindeerzeugung**
Tool and method for machining threads
Outils et procédé de production d'un filetage par enlèvement de copeaux

(30) Priorität: 09.04.2013 DE 102013103538
(43) Veröffentlichungstag der Anmeldung: 15.10.2014
(73) Patentinhaber: EMUGE-Werk Richard Glimpel GmbH & Co.KG Fabrik für Präzisionswerkzeuge, 91207 Lauf a.d. Pegnitz (DE)
(72) Erfinder: Helmut Glimpel, 91207 Lauf a. d. Pegnitz (DE); Stefan Fenn, 91244 Reichenschwand (DE)
(74) Vertreter: Schröer, Gernot H.

(56) Entgegenhaltungen:
- EP-A1- 1 526 293
- EP-A2- 1 112 722
- EP-A2- 1 698 419
- WO-A1-2014/167984
- CH-A- 118 046
- DE-C- 458 478
- DE-C- 473 066
- GB-A- 1 045 794
- US-A1- 2010 260 566

## Beschreibung

Die Erfindung betrifft einen Gewindebohrer gemäß dem Oberbegriff des Anspruchs Ein solcher Gewindebohrer ist beispielsweise aus CH 118046 bekannt. Ferner betrifft die Erfindung ein Verfahren zur spanenden Gewindeerzeugung mit diesem Werkzeug.

Ein derartiges Werkzeug umfasst wenigstens einen um eine Werkzeugachse drehbaren oder drehenden Arbeitsbereich mit mehreren am Werkzeugumfang angeordneten Schneidzähnen. Jeder Schneidzahn weist an seinem radial am weitesten von der Werkzeugachse entfernten Punkt oder Bereich einen Schneidzahnkopf auf. In einem Führungsbereich des Arbeitsbereichs ist der radiale Abstand der Schneidzahnköpfe von der Werkzeugachse im Wesentlichen gleich oder er nimmt entgegen einer vorgesehenen Vorschubrichtung des Werkzeugs ab. In einem in der vorgesehenen Vorschubrichtung dem Führungsbereich vorgelagerten Anlaufbereich des Arbeitsbereichs nimmt der radiale Abstand der Schneidzahnköpfe von der Werkzeugachse entgegen der vorgesehenen Vorschubrichtung des Werkzeugs zu, so dass in einem axialen Querschnitt die übereinander gelegten Profile axial zueinander versetzter Schneidzähne eine Profildifferenzfläche aufweisen.

Wirken zwei axial zueinander versetzte Schneidzähne direkt nacheinander an der gleichen Stelle auf ein Werkstück ein, so entspricht der durch den nachfolgenden Schneidzahn abgetragene Span im Querschnitt zumindest im Wesentlichen der Profildifferenzfläche der beiden Schneidzähne.

Ein Schneidzahn ist nicht nur dann gegenüber einem weiteren Schneidzahn axial versetzt, wenn beide Schneidzähne entlang einer Parallelen zur Werkzeugachse zueinander beabstandet angeordnet sind. Vielmehr werden auch zwei in Richtung des Werkzeugumfangs versetzt angeordnete Schneidzähne als zueinander axial versetzte Schneidzähne verstanden, sofern neben dem Versatz in Umfangsrichtung auch ein axialer Versatz vorliegt.

Zur Gewindeerzeugung oder Gewindenachbearbeitung sind sowohl spanende (alternative Bezeichnung: spanabhebende) als auch spanlose Verfahren und Gewindewerkzeuge bekannt. Spanende Gewindeerzeugung beruht auf Materialabtrag des Materials des Werkstücks im Bereich des Gewindeganges. Spanlose Gewindeerzeugung beruht auf einer Umformung des Werkstücks und Erzeugung des Gewindeganges in dem Werkstück durch Druck. Einen Überblick über im Einsatz befindliche Gewindeerzeugungswerkzeuge und Arbeitsverfahren gibt das Handbuch der Gewindetechnik und Frästechnik, Herausgeber: EMUGE-FRANKEN, Verlag: Publicis Corporate Publishing, Erscheinungsjahr: 2004 (ISBN 3-89578-232-7), im Folgenden nur als "EMUGE-Handbuch" bezeichnet.

Unter die spanenden Gewindeerzeugungswerkzeuge fallen die Gewindebohrer (vgl. EMUGE-Handbuch, Kapitel 8, Seiten 181 bis 298) und die Gewindefräser (vgl. EMUGE-Handbuch, Kapitel 10, Seiten 325 bis 372) sowie, nur für Außengewinde, die Schneideisen (vgl. EMUGE-Handbuch, Kapitel 11, Seiten 373 bis 404).

Ein Gewindebohrer ist ein Gewindeschneidwerkzeug mit Schneidzähnen (alternative Bezeichnung: Gewindeschneidzähne, Schneiden). Die Schneidzähne tragen von dem zu bearbeitendem Material bei der Gewindeerzeugung in der Regel Späne ab. Bei einer Art von Gewindebohrern sind die Schneidzähne entlang eines Außengewindes unter der Gewindesteigung des zu erzeugenden Gewindes angeordnet. Beim Erzeugen eines Innengewindes wird diese Art von Gewindebohrer mit zur Werkzeugachse axialem Vorschub und unter Drehung um seine Werkzeugachse mit von der axialen Vorschubgeschwindigkeit entsprechend der Gewindesteigung abhängiger Drehgeschwindigkeit in ein zylindrisches Kernloch in einem Werkstück bewegt, wobei die Werkzeugachse des Gewindebohrers koaxial zur Mittelachse des Kernloches ausgerichtet wird und seine Schneidzähne permanent mit dem Werkstück an der Kernlochwandung in Eingriff sind (kontinuierlicher Schnitt), so dass ein durchgehender Gewindegang an der Kernlochwandung entsteht. Bei einer anderen Art von Gewindebohrern sind jeweils zwei oder mehrere Schneidzähne in Ebenen senkrecht zur Werkzeugachse angeordnet, wobei diese Ebenen zueinander beabstandet sind, und zwar entsprechend der Ganghöhe des zu erzeugenden Gewindes.

Die Schneidzähne, insbesondere die Schneidzähne im Anlaufbereich, unterliegen einem hohen Verschleiß, insbesondere an Rändern oder Kanten des Schneidzahnkopfes.

Der vorliegenden Erfindung liegt die Aufgabe zu Grunde, der eingangs genannte Gewindebohrer derart weiterzubilden, dass der Verschleiß der Schneidzähne reduziert ist. Ferner soll ein Verfahren zur spanenden Gewindeerzeugung mit diesem Gewindebohrer angegeben werden.

Diese Aufgabe wird hinsichtlich des Gewindebohrers durch die Merkmale des Anspruchs 1 und hinsichtlich des Verfahrens durch die Merkmale des Anspruchs 19 gelöst. Vorteilhafte Ausgestaltungen und Weiterbildungen sind in den jeweils abhängigen Ansprüchen angegeben.

Der erfindungsgemäße Gewindebohrer ist dadurch gekennzeichnet, dass die radiale Schneidzahnprofilbegrenzung der Schneidzähne im Anlaufbereich ganz gekrümmt ist.

Die Vorteile der Erfindung liegen insbesondere darin, dass durch das Vorsehen von Krümmungen in der Schneidzahnprofilbegrenzung der Verschleiß der Schneidzähne reduziert wird. Durch die Krümmungen werden verschleißanfällige geradlinige bzw. Kanten aufweisende Profilbegrenzungen vermieden oder zumindest reduziert, die gekrümmten Profilbegrenzungen sind deutlich weniger verschleißanfällig. Somit erhöht sich die Standdauer des erfindungsgemäßen Gewindebohrers gegenüber vergleichbaren bekannten Werkzeugen.

Weitere Vorteile zeigen sich in dem mit dem erfindungsgemäßen Werkzeug erzeugten Gewinde. Dieses Gewinde weist eine im Vergleich zu mit bekannten Werkzeugen erzeugten Gewinden sehr glatte Oberfläche auf. Ferner weist das erzeugte Gewinde als Negativ zum Werkzeug ebenfalls im Querschnittsprofil Krümmungen auf, insbesondere ist es im Bereich des Außendurchmessers abgerundet. Insgesamt hat das Gewinde eine geringere Kerbwirkung als ein mit einem vergleichbaren bekannten Werkzeug erzeugtes Gewinde.

Eine Weiterbildung der Erfindung sieht vor, dass die Profildifferenzfläche zweier axial zueinander beabstandeter Schneidzähne im Anlaufbereich zwei radial zur Werkzeugachse voneinander beabstandete Begrenzungslinien aufweist, die ganz oder zumindest abschnittsweise gekrümmt sind.

Die Vorteile dieser Weiterbildung liegen insbesondere in der Form des Spans, die sich aufgrund der zumindest abschnittsweise gekrümmten Begrenzungslinien der Profildifferenzfläche ergibt. Der Span weist dadurch keinen rechteckigen oder trapezförmigen Querschnitt, sondern einen entsprechend der Profildifferenzfläche mit Krümmungen versehenen Querschnitt auf. Es entsteht somit ein gekrümmter Span.

Eine Weiterbildung der Erfindung sieht vor, dass der kürzeste Abstand jedes Punktes der radial innenliegenden Begrenzungslinie der Profildifferenzfläche zur radial außenliegenden Begrenzungslinie der Profildifferenzfläche entlang der gesamten innenliegenden Begrenzungslinie oder entlang mindestens eines Abschnitts der innenliegenden Begrenzungslinie, insbesondere entlang eines gekrümmten Abschnitts, konstant ist. Die Profildifferenzfläche weist somit insgesamt oder zumindest abschnittsweise eine konstante Dicke auf, so dass ein entsprechend dieser Profildifferenzfläche von dem nachfolgenden Schneidzahn erzeugter Span nicht nur ganz oder abschnittsweise gekrümmt ist, sondern ebenfalls in seinem gesamten Querschnitt oder abschnittsweise im Wesentlichen eine konstante Dicke aufweist.

Es kann auch vorgesehen sein, dass der kürzeste Abstand jedes Punktes der radial innenliegenden Begrenzungslinie der Profildifferenzfläche zur radial außenliegenden Begrenzungslinie der Profildifferenzfläche entlang der gesamten innenliegenden Begrenzungslinie oder entlang mindestens eines Abschnitts der innenliegenden Begrenzungslinie, insbesondere entlang eines gekrümmten Abschnitts, zunimmt oder abnimmt. Dementsprechend weist die Profildifferenzfläche insgesamt oder zumindest abschnittsweise eine sich verändernde Dicke auf. Diese Form findet sich auch im Querschnitt des vom nachfolgenden Schneidzahn erzeugten Spans wieder.

Gemäß einer Weiterbildung nehmen die Profildifferenzflächen zwischen jeweils zwei axial zueinander beabstandeten Schneidzähnen mit zunehmendem axialen Abstand zwischen den beiden Schneidzähnen zu. Je weiter die beiden in Relation gesetzten Schneidzähne somit axial voneinander entfernt sind, desto größer wird die Profildifferenzfläche dieses betrachteten Schneidzahnpaares.

Gemäß einer Ausgestaltung der Erfindung ist der Schneidzahnkopf des Schneidzahns, dessen radiale Schneidzahnprofilbegrenzung die radial innenliegende Begrenzungslinie der Profildifferenzfläche definiert, im Wesentlichen mittig zwischen zwei Schneidzahnflanken des Schneidzahns, dessen radiale Schneidzahnprofilbegrenzung die radial außenliegende Begrenzungslinie der Profildifferenzfläche definiert, angeordnet.

Es ist aber auch möglich, dass der Schneidzahnkopf des Schneidzahns, dessen radiale Schneidzahnprofilbegrenzung die radial innenliegende Begrenzungslinie der Profildifferenzfläche definiert, mit Abstand zur Mitte zwischen zwei Schneidzahnflanken des Schneidzahns, dessen radiale Schneidzahnprofilbegrenzung die radial außenliegende Begrenzungslinie der Profildifferenzfläche definiert, angeordnet ist.

Die vorgenannten Ausbildungen führen zu entsprechenden Formen der jeweiligen Profildifferenzflächen und damit der Querschnitte der erzeugten Späne. Beispielsweise kann eine mittige Anordnung zu einer spiegelsymmetrischen Profildifferenzfläche und eine außermittige Anordnung zu einer nicht symmetrischen Profildifferenzfläche führen. Die Querschnitte der erzeugten Späne weisen eine jeweils entsprechende Form auf.

Die Schneidzähne können beispielsweise in zwei oder mehreren Ebenen senkrecht zur Werkzeugachse angeordnet sein, wobei diese Ebenen zueinander beabstandet sind, und zwar entsprechend der Ganghöhe des zu erzeugenden Gewindes. Es ist aber auch möglich, dass die Schneidzähne entlang eines um die Werkzeugachse umlaufenden Außengewindes angeordnet sind, unter der Gewindesteigung des zu erzeugenden Gewindes. Die vorstehend genannte Profildifferenzfläche, die sich auch im Querschnitt eines erzeugten Spans wiederfindet, ist dann eine Profildifferenzfläche zwischen zwei entlang des Außengewindes aufeinanderfolgenden Schneidzähnen im Anlaufbereich. Die Profildifferenzflächen zwischen jeweils zwei entlang des Außengewindes aufeinanderfolgenden Schneidzähnen im Anlaufbereich können beispielsweise konstant sein oder entgegen der vorgesehenen Vorschubrichtung des Werkzeugs zunehmen.

Eine Weiterbildung der Erfindung sieht vor, dass die Schneidzähne auf einem Werkzeugkern angeordnet sind.

Hierbei kann vorgesehen sein, dass der Umfangsradius des Werkzeugkerns im Anlaufbereich entgegen der vorgesehenen Vorschubrichtung des Werkzeugs zunimmt. Man spricht in diesem Fall von einer sogenannten Anstrehlung. Die Höhe der Schneidzähne über dem Werkzeugkern im Anlaufbereich kann sowohl konstant als auch entgegen der vorgesehenen Vorschubrichtung des Werkzeugs zunehmend ausgebildet sein. Die Zunahme des radialen Abstands der Schneidzahnköpfe von der Werkzeugachse im Anlaufbereich entgegen einer vorgesehenen Vorschubrichtung des Werkzeugs wird in jedem Fall durch die Zunahme des Umfangsradius des Werkzeugkerns erreicht und gegebenenfalls, sofern entsprechend verwirklicht, durch die Zunahme der Höhe der Schneidzähne über dem Werkzeugkern unterstützt.

Es kann auch vorgesehen sein, dass der Umfangsradius des Werkzeugkerns im Anlaufbereich im Wesentlichen gleichbleibend ist, und dass die Höhe der Schneidzahnköpfe über dem Werkzeugkern im Anlaufbereich entgegen der vorgesehenen Vorschubrichtung des Werkzeugs zunimmt. Die Zunahme des radialen Abstands der Schneidzahnköpfe von der Werkzeugachse im Anlaufbereich entgegen einer vorgesehenen Vorschubrichtung des Werkzeugs wird in diesem Fall durch die Zunahme der Höhe der Schneidzähne über dem Werkzeugkern erreicht.

Alternativ oder additiv zu den vorstehend beschriebenen Varianten kann vorgesehen sein, dass der Umfangsradius des Werkzeugkerns im Führungsbereich entgegen der vorgesehenen Vorschubrichtung des Werkzeugs abnimmt, wobei die Abnahme vorzugsweise weniger stark ausfällt als die gegebenenfalls vorgesehene Zunahme im Anlaufbereich. Alternativ kann der Umfangsradius des Werkzeugkerns im Führungsbereich auch im Wesentlichen gleichbleibend sein. In diesem Fall kann die Höhe der Schneidzahnköpfe über dem Werkzeugkern im Führungsbereich im Wesentlichen gleich sein oder entgegen der vorgesehenen Vorschubrichtung des Werkzeugs abnehmen, wobei die Abnahme vorzugsweise wiederum weniger stark ausfällt als die gegebenenfalls vorgesehene Zunahme im Anlaufbereich.

Eine Ausführungsform der Erfindung sieht vor, dass der Radius oder die Radien der Krümmung der radialen Schneidzahnprofilbegrenzung der Schneidzähne im Anlaufbereich und/oder im Führungsbereich zwischen 4/10 und 8/10 der Höhe des höchsten Schneidzahns über dem Werkzeugkern betragen.

Das Werkzeug kann auch derart ausgebildet sein, dass die Profile der Schneidzähne im Anlaufbereich und/oder im Führungsbereich einander hinsichtlich ihrer Form entsprechen.

Es kann vorgesehen sein, dass der Radius der Krümmung der radialen Schneidzahnprofilbegrenzung der Schneidzähne im Anlaufbereich und/oder im Führungsbereich konstant ist. Alternativ hierzu kann der Radius der Krümmung der radialen Schneidzahnprofilbegrenzung der Schneidzähne im Anlaufbereich und/oder im Führungsbereich in einem mittleren Abschnitt des jeweiligen Zahnkopfes auch einen anderen, insbesondere einen größeren Radius aufweisen als die Krümmungen in einem oder in beiden Übergangsbereichen zu angrenzenden Zahnflanken des jeweiligen Schneidzahns.

Gemäß einer Weiterbildung kann vorgesehen sein, dass die Schneidzahnprofilbegrenzung keinen Knick aufweist. Alternativ können aber auch ein oder mehrere Knicke vorgesehen sein. Insbesondere kann beispielsweise am Übergang vom Zahnkopf zu einer oder beiden angrenzenden Zahnflanken mindestens ein Knick vorgesehen sein. Der Übergang kann aber auch ohne Knick ausgebildet sein.

Das erfindungsgemäße Verfahren sieht die Verwendung des vorstehend beschriebenen erfindungsgemäßen Werkzeugs in einer beliebigen Ausführungsform vor. Bei diesem Verfahren erzeugen die Schneidzähne, wie bereits dargelegt, im Anlaufbereich gekrümmte Späne.
Die Vorteile dieses Verfahrens ergeben sich aus der Beschreibung des erfindungsgemäßen Werkzeugs.

Die Erfindung wird nachstehend auch hinsichtlich weiterer Merkmale und Vorteile anhand der Beschreibung von Ausführungsbeispielen und unter Bezugnahme auf die beiliegenden schematischen Zeichnungen näher erläutert. Dabei zeigen
- FIG 1: ein beispielhaftes erfindungsgemäßes Werkzeug in einer axialen Querschnittsdarstellung,
- FIG 2: ein Beispiel einer Profildifferenzfläche zwischen zwei im axialen Querschnitt übereinandergelegten Profilen zweier axial zueinander beabstandeter Schneidzähne, und
- FIG 3: ein weiteres Beispiel einer Profildifferenzfläche zwischen zwei im axialen Querschnitt übereinandergelegten Profilen zweier axial zueinander beabstandeter Schneidzähne.

Einander entsprechende Teile und Komponenten sind in den Figuren mit den gleichen Bezugszeichen bezeichnet.

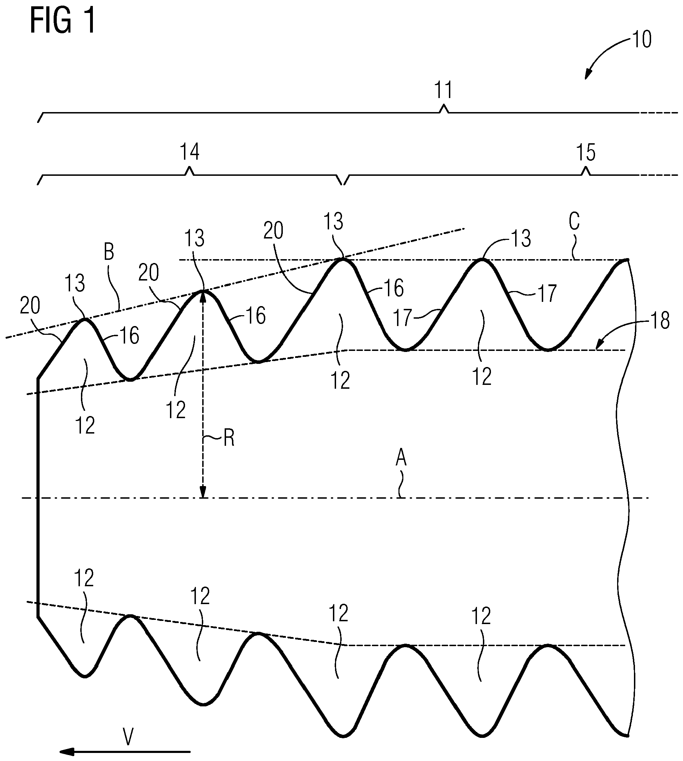

FIG 1 zeigt in einer axialen Querschnittsdarstellung ein Ausführungsbeispiel eines erfindungsgemäßen Werkzeugs 10 zur spanenden Gewindeerzeugung. Das Werkzeug 10 umfassend einen um eine Werkzeugachse A drehbaren oder drehenden Arbeitsbereich 11 mit mehreren am Werkzeugumfang angeordneten Schneidzähnen 12. Konkret handelt es sich hierbei um einen Gewindebohrer, bei dem zwei oder mehrere Schneidzähne 12 in Ebenen senkrecht zur Werkzeugachse A angeordnet sind, wobei diese Ebenen zueinander beabstandet sind, und zwar entsprechend der Ganghöhe des zu erzeugenden Gewindes.

Erfindungsgemäße Gewindebohrer können aber alternativ hierzu auch derart ausgebildet sein, dass die Schneidzähne entlang eines Außengewindes unter der Gewindesteigung des zu erzeugenden Gewindes angeordnet sind. Für derartige Werkzeuge gelten die nachfolgenden Erläuterungen analog.

Der Arbeitsbereich 11 ist unterteilt in einen Anlaufbereich 14 und einen Führungsbereich 15, wobei der Anlaufbereich 14 in einer vorgesehenen Vorschubrichtung V des Werkzeugs dem Führungsbereich 15 vorgelagert ist, das heißt die Schneidzähne 12 des Anlaufbereichs 14 kommen vor den Schneidzähnen 12 des Führungsbereichs 15 in einen Arbeitseingriff an einem zu bearbeitenden Werkstück.

Im Werkzeug 10 der FIG 1 weist jeder Schneidzahn 12 an seinem radial am weitesten von der Werkzeugachse A entfernten Punkt oder Bereich einen Schneidzahnkopf 13 auf, der zwischen zwei Schneidzahnflanken 17 des jeweiligen Schneidzahns 12 angeordnet ist. Im Anlaufbereich 14 nimmt der radiale Abstand R der Schneidzahnköpfe 12 von der Werkzeugachse A entgegen der vorgesehenen Vorschubrichtung V des Werkzeugs 10 zu. Dies wird in FIG 1 durch die Schneidkopf-Gerade B im Anlaufbereich 14 deutlich, die gegenüber der Werkzeugachse A geneigt ist. Im Führungsbereich 15 hingegen ist der radiale Abstand R der Schneidzahnköpfe 12 von der Werkzeugachse A im Wesentlichen konstant. Dementsprechend verläuft die in FIG 1 eingezeichnete Schneidkopf-Gerade C im Führungsbereich 15 parallel zur Werkzeugachse A.

Die Schneidzähne 12 sind auf einem Werkzeugkern 18 angeordnet, wobei in dem in FIG 1 gezeigten Beispiel der Umfangsradius des Werkzeugkerns 18 im Anlaufbereich 14 entgegen der vorgesehenen Vorschubrichtung V des Werkzeugs 10 zunimmt und im Führungsbereich 14 konstant ist. Es liegt somit eine sogenannte Antrehlung im Anlaufbereich 14 vor. Im dargestellten Beispiel nimmt die Höhe der Schneidzahnköpfe 13 über dem Werkzeugkern 18 entgegen der vorgesehenen Vorschubrichtung V zu, es wäre aber auch möglich, die Höhe der Schneidzahnköpfe 13 im Anlaufbereich 14 gleichbleibend auszubilden, wobei in diesem Fall die Zunahme des radialen Abstands R der Schneidzahnköpfe 13 von der Werkzeugachse A entgegen der vorgesehenen Vorschubrichtung V allein durch die Änderung des Umfangsradius des Werkzeugkerns 18 bewirkt wird.

Alternativ ist es auch möglich, den Umfangsradius des Werkzeugkerns 18 im Anlaufbereich 14 im Wesentlichen gleichbleibend und identisch zum Führungsbereich 15 auszubilden. In diesem Fall wird die Zunahme des radialen Abstands R der Schneidzahnköpfe 13 von der Werkzeugachse A entgegen der vorgesehenen Vorschubrichtung V allein durch eine entsprechende Zunahme der Höhe der Schneidzahnköpfe 13 über dem Werkzeugkern 18 realisiert. Typischerweise wird dies durch einen sogenannten Anschnitt im Anlaufbereich 14 erreicht.

Alternativ zur Darstellung in FIG 1 könnte der Umfangsradius des Werkzeugkerns 18 im Führungsbereich 15 auch entgegen der vorgesehenen Vorschubrichtung V des Werkzeugs 10 abnehmen. In diesem Fall könnte der radiale Abstand R der Schneidzahnköpfe 13 von der Werkzeugachse A entgegen der vorgesehenen Vorschubrichtung V des Werkzeugs 10 ebenfalls abnehmen.

Weiter ist es möglich, dass zwar der Umfangsradius des Werkzeugkerns 18 im Führungsbereich 15 im Wesentlichen konstant ist, dass jedoch die Höhe der Schneidzahnköpfe 13 über dem Werkzeugkern 18 entgegen der Vorschubrichtung V des Werkzeugs 10 abnimmt.

In FIG 1 ist zu erkennen, dass die radiale Schneidzahnprofilbegrenzung 20 der Schneidzähne 12 im Anlaufbereich 14 und vorzugsweise auch im Führungsbereich 15 ganz gekrümmt ist.

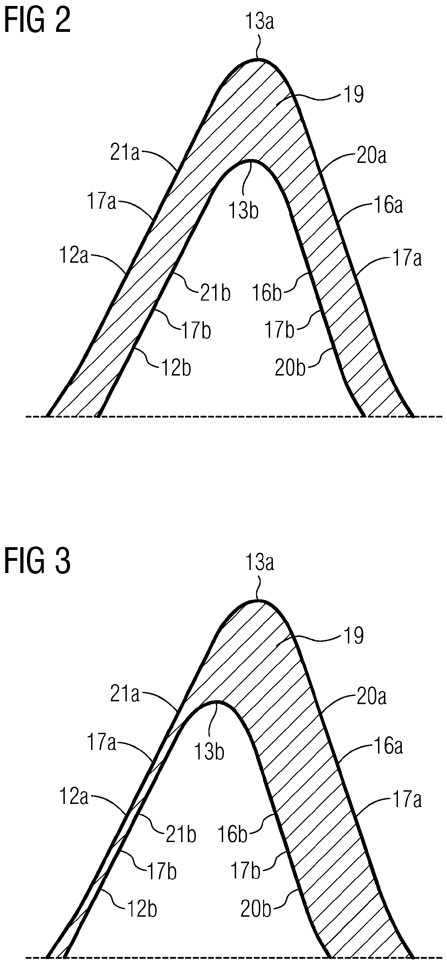

Werden in einem axialen Querschnitt, also in einem Querschnitt parallel zur Werkezugachse A, der die Werkzeugachse A enthält, die Profile 16 axial zueinander beabstandeter Schneidzähne 12 im Anlaufbereich 14 übereinander gelegt, so ergibt sich zwischen den Profilen 16 eine Profildifferenzfläche 19 (in FIG 1 nicht dargestellt, siehe FIG 2 und FIG 3). Diese Profildifferenzfläche 19 wird nachfolgend anhand von FIG 2 und FIG 3 näher erläutert.

FIG 2 und FIG 3 zeigen zwei verschiedene Beispiele einer Profildifferenzfläche 19 zwischen zwei im axialen Querschnitt übereinandergelegten Profilen 16a, 16b zweier axial zueinander beabstandeter Schneidzähne 12a, 12b im Anlaufbereich 14. In beiden Fällen hat der Schneidzahnkopf 13a des in Blickrichtung hinten liegenden Schneidzahns 12a eine größere Höhe über dem Werkzeugkern 18 als der Schneidzahnkopf 13b des in Blickrichtung vorne und damit vor dem vorgenannten Schneidzahn 12a liegenden Schneidzahns 12b. In der Zeichenebene ergibt sich somit sowohl in FIG 2 als auch in FIG 3 zwischen der radialen Schneidzahnprofilbegrenzung 20a des hinten liegenden Schneidzahns 12a und der Schneidzahnbegrenzung 20b des vorne liegenden Schneidzahns 12b eine Profildifferenzfläche 19. Die radiale Schneidzahnprofilbegrenzung 20a des hinten liegenden Schneidzahns 12a bildet eine Begrenzungslinie 21a der Profildifferenzfläche 19, die radiale Schneidzahnprofilbegrenzung 20b des vorne liegenden Schneidzahns 12b bildet eine weitere Begrenzungslinie 21b der Profildifferenzfläche 19. Die beiden Begrenzungslinien 21a und 21b sind radial zur Werkzeugachse A voneinander beabstandet. Beide Begrenzungslinien sind zumindest abschnittsweise gekrümmt.

In FIG 2 und in FIG 3 entsprechen die Profile 16a, 16b der jeweils hintereinander dargestellten Schneidzähne 12a, 12b im Anlaufbereich 14 einander hinsichtlich ihrer Form. Dies ist jedoch nicht zwingend, es sind auch vielfältige Ausgestaltungen möglich, in denen die Profile 16a, 16b hinsichtlich ihrer Form nicht einander entsprechen.

Kommen die in FIG 2 und FIG 3 hintereinander dargestellten Schneidzähne 12a, 12b am gleichen Bereich eines Werkstücks direkt nacheinander, zuerst der vorne liegende Schneidzahn 12a und dann der hinten liegende Schneidzahn 12b, zum Arbeitseinsatz, so entspricht der vom hinteren Schneidzahn 12b abgetragene Span in seinem Querschnitt zumindest im Wesentlichen der Profildifferenzfläche 19. Es wird somit ein gekrümmter Span gebildet.

Im Ausführungsbeispiel nach FIG 2 ist der Schneidzahnkopf 13a des hinten liegenden Schneidzahns 12b im Wesentlichen mittig zwischen zwei Schneidzahnflanken 17a des vorne liegenden Schneidzahns 12a angeordnet. Dies führt zu einem über seine gesamte Breite im Wesentlichen gleich dicken Span, nur im Bereich der Schneidzahnköpfe 13a, 13b ist der Span etwas dicker als in den Randbereichen.
Im Ausführungsbeispiel nach FIG 3 ist der Schneidzahnkopf 13a des hinten liegenden Schneidzahns 12b mit Abstand zur Mitte zwischen den zwei Schneidzahnflanken 17a, 17a des vorne liegenden Schneidzahns 12a angeordnet. Dies führt zu einem Span, der an seiner einen Seite (in FIG 3 links) deutlich schmäler als in der Mitte an den Schneidzahnköpfen 13a, 13b und an seiner anderen Seite (in FIG 3 rechts) ausgebildet ist.

Es sind zahlreiche weitere Ausbildungen der einander entsprechend FIG 2 und FIG 3 zugeordneten Schneidzähne 12a und 12b möglich, wobei die jeweiligen Profile 16a und 16b und damit die jeweiligen radialen Schneidzahnprofilbegrenzungen 20a und 20b zu Profildifferenzflächen 19 mit entsprechenden Begrenzungslinien 21a und 21b führen.

Beispielsweise kann der kürzeste Abstand jedes Punktes der radial innenliegenden Begrenzungslinie 21b der Profildifferenzfläche 19 zur radial außenliegenden Begrenzungslinie 21a der Profildifferenzfläche 19 entlang der gesamten innenliegenden Begrenzungslinie 21b oder entlang mindestens eines Abschnitts der innenliegenden Begrenzungslinie 21b, insbesondere entlang eines gekrümmten Abschnitts, konstant sein.

Auch kann der kürzeste Abstand jedes Punktes der radial innenliegenden Begrenzungslinie 21b der Profildifferenzfläche 19 zur radial außenliegenden Begrenzungslinie 21a der Profildifferenzfläche 19 entlang der gesamten innenliegenden Begrenzungslinie 21b oder entlang mindestens eines Abschnitts der innenliegenden Begrenzungslinie 21b, insbesondere entlang eines gekrümmten Abschnitts, zunehmen oder abnehmen.

Es kann vorgesehen sein, dass die Profildifferenzflächen 19 zwischen jeweils zwei axial zueinander beabstandeten Schneidzähnen 12a, 12b mit zunehmendem axialen Abstand zwischen den beiden Schneidzähnen 12a, 12b zunimmt.

Die mit diesen Ausgestaltungen erzeugten Späne weisen in ihrem Querschnitt jeweils eine der jeweiligen Profildifferenzfläche entsprechende Ausgestaltung auf.

### Bezugszeichenliste

10 Werkzeug
11 Arbeitsbereich
12, 12a, 12bSchneidzahn
13, 13a, 13bSchneidzahnkopf
14 Anlaufbereich
15 Führungsbereich
16, 16a, 16bProfil des Schneidzahns 12
17, 17a, 17bSchneidzahnflanke
18 Werkzeugkern
19 Profildifferenzfläche
20, 20a, 20bRadiale Schneidzahnprofilbegrenzung
21a, 21b Begrenzungslinien der Profildifferenzfläche 19

A Werkzeugachse
B Schneidkopf-Gerade im Anlaufbereich 14
C Schneidkopf-Gerade im Führungsbereich 15
R Radialer Abstand des Schneidzahnkopfes 13 von der Werkzeugachse A
V Vorgesehene Vorschubrichtung

## Patentansprüche

1. Gewindebohrer
umfassend wenigstens einen um eine Werkzeugachse (A) drehbaren oder drehenden Arbeitsbereich (11) mit mehreren am Werkzeugumfang angeordneten Schneidzähnen (12; 12a, 12b), wobei jeder Schneidzahn (12; 12a, 12b) an seinem radial am weitesten von der Werkzeugachse (A) entfernten Punkt oder Bereich einen Schneidzahnkopf (13; 13a, 13b) aufweist,
wobei in einem Führungsbereich (15) des Arbeitsbereichs (11) der radiale Abstand (R) der Schneidzahnköpfe (13; 13a, 13b) von der Werkzeugachse (A) im Wesentlichen gleich ist oder entgegen einer vorgesehenen Vorschubrichtung (V) des Gewindebohrers (10) abnimmt,
wobei in einem in der vorgesehenen Vorschubrichtung (V) dem Führungsbereich (15) vorgelagerten Anlaufbereich (14) des Arbeitsbereichs (11) der radiale Abstand (R) der Schneidzahnköpfe (13; 13a, 13b) von der Werkzeugachse (A) entgegen der vorgesehenen Vorschubrichtung (V) des Gewindebohrers (10) zunimmt, so dass in einem axialen Querschnitt die übereinander gelegten Profile (16; 16a, 16b) axial zueinander beabstandeter Schneidzähne (12; 12a, 12b) eine Profildifferenzfläche (19) aufweisen,
**dadurch gekennzeichnet,**
**dass** die radiale Schneidzahnprofilbegrenzung (20) der Schneidzähne (12; 12a, 12b) im Anlaufbereich (14) ganz gekrümmt ist.

2. Gewindebohrer nach Anspruch 1,
**dadurch gekennzeichnet,**
**dass** die Profildifferenzfläche (19) zweier axial zueinander beabstandeter Schneidzähne (12; 12a, 12b) im Anlaufbereich (14) zwei radial zur Werkzeugachse (A) voneinander beabstandete Begrenzungslinien (21a; 21b) aufweist, die ganz oder zumindest abschnittsweise gekrümmt sind.

3. Gewindebohrer nach Anspruch 2,
**dadurch gekennzeichnet,**
**dass** der kürzeste Abstand jedes Punktes der radial innenliegenden Begrenzungslinie (21b) der Profildifferenzfläche (19) zur radial außenliegenden Begrenzungslinie (21a) der Profildifferenzfläche (19) entlang der gesamten innenliegenden Begrenzungslinie (21b) oder entlang mindestens eines Abschnitts der innenliegenden Begrenzungslinie (21b), insbesondere entlang eines gekrümmten Abschnitts, konstant ist
und/oder
**dass** der kürzeste Abstand jedes Punktes der radial innenliegenden Begrenzungslinie (21b) der Profildifferenzfläche (19) zur radial außenliegenden Begrenzungslinie (21a) der Profildifferenzfläche (19) entlang der gesamten innenliegenden Begrenzungslinie (21b) oder entlang mindestens eines Abschnitts der innenliegenden Begrenzungslinie (21b), insbesondere entlang eines gekrümmten Abschnitts, zunimmt oder abnimmt.

4. Gewindebohrer nach einem der Ansprüche 2 bis 3,
**dadurch gekennzeichnet,**
**dass** die Profildifferenzflächen (19) zwischen jeweils zwei axial zueinander beabstandeten Schneidzähnen (12; 12a, 12b) mit zunehmendem axialen Abstand zwischen den beiden Schneidzähnen (12; 12a, 12b) zunehmen.

5. Gewindebohrer nach einem der Ansprüche 2 bis 4,
**dadurch gekennzeichnet,**
**dass** der Schneidzahnkopf (13b) des Schneidzahns (12b), dessen radiale Schneidzahnprofilbegrenzung (20b) die radial innenliegende Begrenzungslinie (21b) der Profildifferenzfläche (19) definiert, im Wesentlichen mittig zwischen zwei Schneidzahnflanken (17a) des Schneidzahns (12a), dessen radiale Schneidzahnprofilbegrenzung (20a) die radial außenliegende Begrenzungslinie (21a) der Profildifferenzfläche (19) definiert, angeordnet ist
und/oder
**dass** der Schneidzahnkopf (13b) des Schneidzahns (12b), dessen radiale Schneidzahnprofilbegrenzung (20b) die radial innenliegende Begrenzungslinie (21b) der Profildifferenzfläche (19) definiert, mit Abstand zur Mitte zwischen zwei Schneidzahnflanken (17a) des Schneidzahns (12a), dessen radiale Schneidzahnprofilbegrenzung (20a) die radial außenliegende Begrenzungslinie (21a) der Profildifferenzfläche (19) definiert, angeordnet ist.

6. Gewindebohrer nach einem der Ansprüche 2 bis 5,
**dadurch gekennzeichnet,**
**dass** die Schneidzähne (12; 12a, 12b) entlang eines um die Werkzeugachse umlaufenden Außengewindes unter der Gewindesteigung des zu erzeugenden Gewindes angeordnet sind und die Profildifferenzfläche (19) eine Profildifferenzfläche (19) zwischen zwei entlang des Außengewindes aufeinanderfolgenden Schneidzähnen (12; 12a, 12b) im Anlaufbereich (14) ist,
wobei vorzugsweise die Profildifferenzflächen (19) zwischen jeweils zwei entlang des Außengewindes aufeinanderfolgenden Schneidzähnen (12; 12a, 12b) im Anlaufbereich (14) konstant sind oder entgegen der vorgesehenen Vorschubrichtung (V) des Gewindebohrers (10) zunehmen.

7. Gewindebohrer nach einem der vorhergehenden Ansprüche,
**dadurch gekennzeichnet,**
**dass** die Schneidzähne (12; 12a, 12b) auf einem Werkzeugkern (18) angeordnet sind.

8. Gewindebohrer nach Anspruch 7,
**dadurch gekennzeichnet,**
**dass** der Umfangsradius des Werkzeugkerns (18) im Anlaufbereich (14) entgegen der vorgesehenen Vorschubrichtung (V) des Gewindebohrers (10) zunimmt.

9. Gewindebohrer nach Anspruch 7,
**dadurch gekennzeichnet,**
**dass** der Umfangsradius des Werkzeugkerns (18) im Anlaufbereich (14) im Wesentlichen gleichbleibend ist, und
**dass** die Höhe der Schneidzahnköpfe (13; 13a, 13b) über dem Werkzeugkern (18) im Anlaufbereich (14) entgegen der vorgesehenen Vorschubrichtung (V) des Gewindebohrers zunimmt.

10. Gewindebohrer nach einem der Ansprüche 7 bis 9,
**dadurch gekennzeichnet,**
**dass** der Umfangsradius des Werkzeugkerns (18) im Führungsbereich (15) im Wesentlichen gleichbleibend ist, und
**dass** die Höhe der Schneidzahnköpfe (13; 13a, 13b) über dem Werkzeugkern (18) im Führungsbereich (15) im Wesentlichen gleich ist oder entgegen der vorgesehenen Vorschubrichtung (V) des Gewindebohrers abnimmt.

11. Gewindebohrer nach einem der vorhergehenden Ansprüche,
**dadurch gekennzeichnet,**
**dass** die Profile (16; 16a, 16b) der Schneidzähne (12; 12a, 12b) im Anlaufbereich (14) und/oder im Führungsbereich (15) einander hinsichtlich ihrer Form entsprechen.

12. Gewindebohrer nach einem der vorhergehenden Ansprüche,
**dadurch gekennzeichnet,**
**dass** der Radius der Krümmung der radialen Schneidzahnprofilbegrenzung (20; 20a, 20b) der Schneidzähne (12; 12a, 12b) im Anlaufbereich (14) und/oder im Führungsbereich (15) konstant ist.

13. Gewindebohrer nach einem der Ansprüche 1 bis12,
**dadurch gekennzeichnet,**
**dass** der Radius der Krümmung der radialen Schneidzahnprofilbegrenzung (20; 20a, 20b) der Schneidzähne (12; 12a, 12b) im Anlaufbereich (14) und/oder im Führungsbereich (15) in einem mittleren Abschnitt des jeweiligen Zahnkopfes (13; 13a, 13b) einen anderen, insbesondere einen größeren Radius aufweist als die Krümmungen in einem oder in beiden Übergangsbereichen zu angrenzenden Zahnflanken (17; 17a, 17b) des jeweiligen Schneidzahns (12; 12a, 12b).

14. Verfahren zur spanenden Gewindeerzeugung unter Verwendung eines Gewindebohrers (10) nach einem der vorhergehenden Ansprüche,
bei dem die Schneidzähne (12; 12a, 12b) im Anlaufbereich (14) gekrümmte Späne erzeugen.

## Claims

1. Screw tap, comprising at least one working region (11) which can be rotated or is rotated about a tool axis (A) and has a plurality of cutting teeth (12; 12a, 12b) which are arranged on the tool circumference, each cutting tooth (12; 12a, 12b) having a cutting tooth head (13; 13a, 13b) at the point or region thereof which is radially furthest away from the tool axis (A), the radial distance (R) of the cutting tooth heads (13; 13a, 13b) from the tool axis (A) being substantially the same or decreasing counter to an intended feed direction (V) of the screw tap (10) in a guide region (15) of the working region (11), the radial distance (R) of the cutting tooth heads (13; 13a, 13b) from the tool axis (A) increasing counter to the intended feed direction (V) of the screw tap (10) in a run-on region (14) of the working region (11) that is upstream of the guide region (15) in the intended feed direction (V) such that, in an axial cross-section, the superimposed profiles (16; 16a, 16b) of axially spaced-apart cutting teeth (12; 12a, 12b) have a profile differential surface (19), **characterized in that** the radial cutting tooth profile boundary (20) of the cutting teeth (12; 12a, 12b) is completely curved in the run-on region (14).

2. Screw tap according to claim 1, **characterized in that** the profile differential surface (19) of two axially spaced-apart cutting teeth (12; 12a, 12b) in the run-on region (14) has two boundary lines (21a; 21b) which are mutually spaced apart radially to the tool axis (A) and are curved completely or at least in portions.

3. Screw tap according to claim 2, **characterized in that** the shortest distance of each point of the radially inner boundary line (21b) of the profile differential surface (19) from the radially outer boundary line (21a) of the profile differential surface (19) is constant along the entire inner boundary line (21b) or along at least a portion of the inner boundary line (21b), in particular along a curved portion, and/or **in that** the shortest distance of each point of the radially inner boundary line (21b) of the profile differential surface (19) from the radially outer boundary line (21a) of the profile differential surface (19) increases or decreases along the entire inner boundary line (21b) or along at least a portion of the inner boundary line (21b), in particular along a curved portion.

4. Screw tap according to either claim 2 or claim 3, **characterized in that** the profile differential surfaces (19) between each of two axially mutually spaced-apart cutting teeth (12; 12a, 12b) increase at an increasing axial distance between the two cutting teeth (12; 12a, 12b).

5. Screw tap according to any of claims 2 to 4, **characterized in that** the cutting tooth head (13b) of the cutting tooth (12b), of which the radial cutting tooth profile boundary (20b) defines the radially inner boundary line (21b) of the profile differential surface (19), is arranged substantially in the center between two cutting tooth flanks (17a) of the cutting tooth (12a), of which the radial cutting tooth profile boundary (20a) defines the radially outer boundary line (21a) of the profile differential surface (19), and/or **in that** the cutting tooth head (13b) of the cutting tooth (12b), of which the radial cutting tooth profile boundary (20b) defines the radially inner boundary line (21b) of the profile differential surface (19), is arranged at a distance from the center between two cutting tooth flanks (17a) of the cutting tooth (12a), of which the radial cutting tooth profile boundary (20a) defines the radially outer boundary line (21a) of the profile differential surface (19).

6. Screw tap according to any of claims 2 to 5, **characterized in that** the cutting teeth (12; 12a, 12b) are arranged along an external thread, extending around the tool axis, at the thread pitch of the thread to be produced and the profile differential surface (19) is a profile differential surface (19) between two successive cutting teeth (12; 12a, 12b) along the outer thread in the run-on region (14), the profile differential surfaces (19) between two successive cutting teeth (12; 12a, 12b) along the outer thread in the run-on region (14) preferably being constant or increasing counter to the intended feed direction (V) of the screw tap (10).

7. Screw tap according to any of the preceding claims, **characterized in that** the cutting teeth (12; 12a, 12b) are arranged on a tool core (18).

8. Screw tap according to claim 7, **characterized in that** the circumferential radius of the tool core (18) in the run-on region (14) increases counter to the intended feed direction (V) of the screw tap (10).

9. Screw tap according to claim 7, **characterized in that** the circumferential radius of the tool core (18) in the run-on region (14) remains substantially the same, and **in that** the height of the cutting tooth heads (13; 13a, 13b) above the tool core (18) in the run-on region (14) increases counter to the intended feed direction (V) of the screw tap.

10. Screw tap according to any of claims 7 to 9, **characterized in that** the circumferential radius of the tool core (18) in the guide region (15) remains substantially the same, and **in that** the height of the cutting tooth heads (13; 13a, 13b) above the tool core (18) in the guide region (15) is substantially the same or decreases counter to the intended feed direction (V) of the screw tap.

11. Screw tap according to any of the preceding claims, **characterized in that** the profiles (16; 16a, 16b) of the cutting teeth (12; 12a, 12b) in the run-on region (14) and/or in the guide region (15) correspond to one another in terms of their shape.

12. Screw tap according to any of the preceding claims, **characterized in that** the radius of curvature of the radial cutting tooth profile boundary (20; 20a, 20b) of the cutting teeth (12; 12a, 12b) in the run-on region (14) and/or in the guide region (15) is constant.

13. Screw tap according to any of claims 1 to 12, **characterized in that** the radius of curvature of the radial cutting tooth profile boundary (20; 20a, 20b) of the cutting teeth (12; 12a, 12b) in the run-on region (14) and/or in the guide region (15) has a different, in particular a larger, radius in a central portion of the relevant tooth head (13; 13a, 13b) than the curvatures in one or in both transition regions to adjacent tooth flanks (17; 17a, 17b) of the relevant cutting tooth (12; 12a, 12b).

14. Method for producing thread by machining using a screw tap (10) according to any of the preceding claims, wherein the cutting teeth (12; 12a, 12b) in the run-on region (14) produce curved chips.

## Revendications

1. Taraud
comprenant au moins une zone de travail (11) qui peut tourner ou qui tourne autour d'un axe d'outil (A), laquelle zone de travail comporte une pluralité de dents de coupe (12 ; 12a, 12b) disposées sur la circonférence de l'outil, chaque dent de coupe (12 ; 12a, 12b) présentant une tête de dent de coupe (13 ; 13a, 13b) à son point ou dans sa zone radialement le/la plus éloigné(e) de l'axe d'outil (A),
la distance radiale (R) entre les têtes de dent de coupe (13 ; 13a, 13b) et l'axe d'outil (A) dans une zone de guidage (15) de la zone de travail (11) étant essentiellement identique ou diminuant dans le sens opposé à une direction d'avance (V) prévue du taraud (10),
la distance radiale (R) entre les têtes de dent de coupe (13 ; 13a, 13b) et l'axe d'outil (A) augmentant dans le sens opposé à la direction d'avance (V) prévue du taraud (10) dans une zone de montée (14) de la zone de travail (11) en amont de la zone de guidage (15) dans la direction d'avance (V) prévue, de sorte qu'en coupe axiale, les profils superposés (16 ; 16a, 16b) de dents de coupe (12 ; 12a, 12b) espacées axialement l'une par rapport à l'autre ont une surface différentielle de profil (19),
**caractérisé en ce**
**que** la délimitation radiale de profil de dent de coupe (20) des dents de coupe (12 ; 12a, 12b) est complètement incurvée dans la zone de montée (14).

2. Taraud selon la revendication 1,
**caractérisé en ce**
**que** la surface différentielle de profil (19) de deux dents de coupe (12 ; 12a, 12b) espacées axialement l'une par rapport à l'autre présente, dans la zone de montée (14), deux lignes de délimitation (21a ; 21b) espacées l'une par rapport à l'autre radialement à l'axe d'outil (A), et qui sont complètement ou au moins partiellement incurvées.

3. Taraud selon la revendication 2,
**caractérisé en ce**
**que** la distance la plus courte entre chaque point de la ligne de délimitation radialement intérieure (21b) de la surface différentielle de profil (19) et la ligne de délimitation radialement extérieure (21a) de la surface différentielle de profil (19) est constante le long de l'ensemble de la ligne de délimitation intérieure (21b) ou le long d'au moins une section de la ligne de délimitation intérieure (21b), en particulier le long d'une section incurvée,
et/ou en ce
**que** la distance la plus courte entre chaque point de la ligne de délimitation radialement intérieure (21b) de la surface différentielle de profil (19) et la ligne de délimitation radialement extérieure (21a) de la surface différentielle de profil (19) augmente ou diminue le long de l'ensemble de la ligne de délimitation intérieure (21b) ou le long d'au moins une section de la ligne de délimitation intérieure (21b), en particulier le long d'une section incurvée.

4. Taraud selon l'une des revendications 2 et 3,
**caractérisé en ce**
**que** les surfaces différentielles de profil (19) entre deux dents de coupe (12 ; 12a, 12b) espacées axialement l'une par rapport à l'autre augmentent à mesure que la distance axiale entre les deux dents de coupe (12 ; 12a, 12b) augmente.

5. Taraud selon l'une des revendications 2 à 4,
**caractérisé en ce**
**que** la tête de dent de coupe (13b) de la dent de coupe (12b), dont la délimitation radiale de profil de dent de coupe (20b) définit la ligne de délimitation radialement intérieure (21b) de la surface différentielle de profil (19), est disposée sensiblement au milieu entre deux flancs de dent de coupe (17a) de la dent de coupe (12a), dont la délimitation radiale de profil de dent de coupe (20a) définit la ligne de délimitation radialement extérieure (21a) de la surface différentielle de profil (19)
et/ou en ce
**que** la tête de dent de coupe (13b) de la dent de coupe (12b), dont la délimitation radiale de profil de dent de coupe (20b) définit la ligne de délimitation radialement intérieure (21b) de la surface différentielle de profil (19), est disposée à une certaine distance du point de milieu entre deux flancs de dent de coupe (17a) de la dent de coupe (12a), dont la délimitation radiale de profil de dent de coupe (20a) définit la ligne de délimitation radialement extérieure (21a) de la surface différentielle de profil (19).

6. Taraud selon l'une des revendications 2 à 5,
**caractérisé en ce**
**que** les dents de coupe (12 ; 12a, 12b) sont disposées le long d'un filetage extérieur tournant autour de l'axe d'outil sous le pas de filetage du filetage à réaliser, et la surface différentielle de profil (19) est une surface différentielle de profil (19) entre deux dents de coupe successives (12 ; 12a, 12b) le long du filetage extérieur dans la zone de montée (14),
les surfaces différentielles de profil (19) entre deux dents de coupe successives (12 ; 12a, 12b) le long du filetage extérieur dans la zone de montée (14) étant de préférence constantes ou augmentant dans le sens opposé à la direction d'avance (V) prévue du taraud (10).

7. Taraud selon l'une des revendications précédentes,
**caractérisé en ce**
**que** les dents de coupe (12 ; 12a, 12b) sont disposées sur un cœur d'outil (18).

8. Taraud selon la revendication 7,
**caractérisé en ce**
**que** le rayon circonférentiel du cœur d'outil (18) augmente dans la zone de montée (14) dans le sens opposé à la direction d'avance (V) prévue du taraud (10).

9. Taraud selon la revendication 7,
**caractérisé en ce**
**que** le rayon circonférentiel du cœur d'outil (18) est sensiblement constant dans la zone de montée (14), et en ce
**que** la hauteur des têtes de dents de coupe (13 ; 13a, 13b) au-dessus du cœur d'outil (18) dans la zone de montée (14) augmente dans le sens opposé à la direction d'avance (V) prévue du taraud.

10. Taraud selon l'une des revendications 7 à 9,
**caractérisé en ce**
**que** le rayon circonférentiel du cœur d'outil (18) est sensiblement constant dans la zone de guidage (15), et en ce
**que** la hauteur des têtes de dents de coupe (13 ; 13a, 13b) au-dessus du cœur d'outil (18) est sensiblement identique dans la zone de guidage (15) ou diminue dans le sens opposé à la direction d'avance (V) prévue du taraud.

11. Taraud selon l'une des revendications précédentes,
**caractérisé en ce**
**que** les profils (16 ; 16a, 16b) des dents de coupe (12 ; 12a, 12b) correspondent les uns aux autres en termes de forme dans la zone de montée (14) et/ou dans la zone de guidage (15).

12. Taraud selon l'une des revendications précédentes,
**caractérisé en ce**
**que** le rayon de courbure de la délimitation radiale de profil de dent de coupe (20 ; 20a, 20b) des dents de coupe (12 ; 12a, 12b) est constant dans la zone de montée (14) et/ou dans la zone de guidage (15).

13. Taraud selon l'une des revendications 1 à 12,
**caractérisé en ce**
**que** le rayon de courbure de la délimitation radiale de profil de dent de coupe (20 ; 20a, 20b) des dents de coupe (12 ; 12a, 12b) dans la zone de montée (14) et/ou dans la zone de guidage (15) dans une section centrale de la tête de dent respective (13 ; 13a, 13b) a un rayon différent, en particulier plus grand que les courbures dans une ou dans les deux zones de transition vers les flancs de dent (17 ; 17a, 17b) adjacents de la dent de coupe respective (12 ; 12a, 12b).

14. Procédé de production d'un filetage par enlèvement de copeaux à l'aide d'un taraud (10) selon l'une des revendications précédentes,
dans lequel les dents de coupe (12 ; 12a, 12b) produisent des copeaux incurvés dans la zone de montée (14).
